(19) Europäisches Patentamt
European Patent Office
Office européen des brevets

(11) **EP 0 781 423 B1**

(12) **EUROPÄISCHE PATENTSCHRIFT**

(45) Veröffentlichungstag und Bekanntmachung des Hinweises auf die Patenterteilung:
**29.11.2000 Patentblatt 2000/48**

(51) Int. Cl.$^7$: **G02B 6/42**, H01S 5/022

(21) Anmeldenummer: **95930383.5**

(86) Internationale Anmeldenummer:
**PCT/DE95/01237**

(22) Anmeldetag: **09.09.1995**

(87) Internationale Veröffentlichungsnummer:
**WO 96/08740 (21.03.1996 Gazette 1996/13)**

(54) **LASERMODUL**

LASER CONNECTOR MODULE

MODULE DE CONNEXION LASER

(84) Benannte Vertragsstaaten:
**DE ES FR GB IT SE**

(30) Priorität: **15.09.1994 DE 4432794**

(43) Veröffentlichungstag der Anmeldung:
**02.07.1997 Patentblatt 1997/27**

(73) Patentinhaber: **ROBERT BOSCH GMBH**
**70442 Stuttgart (DE)**

(72) Erfinder:
• **MOESS, Eberhard**
  **D-71540 Murrhardt (DE)**
• **HAUER, Heiner**
  **D-70734 Fellbach (DE)**
• **KUKE, Albrecht**
  **D-71549 Auenwald (DE)**

(56) Entgegenhaltungen:
**EP-A- 0 465 230      EP-A- 0 590 393**
**WO-A-90/00752**

## Beschreibung

Lasermodule mit einem Halbleiterlaser in einem Gehäuse, einer Zweilinsen-Koppeloptik zur Ankopplung an einen Lichtwellenleiter, einem Isolator im Strahlengang zwischen den beiden Linsen und mit einem Peltierkühler sind aus der EP 02 59 888 B1 und der DE 42 32 327 A1 bekannt. In beiden Schriften wird ein Laser auf einem Chipträger beschrieben, dessen Licht mit einer ersten Linse kollimiert wird und die Gehäusewand über ein schräg gestelltes Planfenster durchdringt. Das Gehäuse wird dabei mit dem Planfenster hermetisch dicht abgeschlossen. Außerhalb des Gehäuses wird das Licht mit einer zweiten Linse auf die Stirnfläche einer Lichtleitfaser fokussiert. In der zweiten Schritt wird zusätzlich noch ein Isolator beschrieben, der außerhalb des hermetisch eingeschlossenen Volumens in einem stutzen sitzt, der in das Gehäuse hineinragt und an seinem Ende das Fenster trägt.

Nachteilhaft an den bekannten Lösungen ist, daß der Laserchip auf einem Chipträger sitzt, der selbst mit geometrischen Toleranzen behaftet ist. Diese Toleranzen zusammen mit den Toleranzen des Laserchips selbst und den Montagetoleranzen des Laserchips auf dem Chipträger und des Chipträgers auf einer Montageplatte bestimmen in ihrem Zusammenwirken die Position der lichtaussendenden Fläche des Lasers. Da die Strahltaille des aus dem Laser austretenden Strahlbündels, das näherungsweise als ein Gaußstrahl mit elliptischem Profil beschrieben werden kann, Taillenhalbachsen von unter einem Mikrometer hat, muß die Position der ersten Linse zum Laser im Submikrometerbereich genau festliegen. Um diese Genauigkeit zu erreichen, ist in den Lösungen nach dem Stand der Technik eine Justierung der Faser in axialer und lateraler Richtung vorgesehen. Der Toleranzbereich für die Position des Lasers zur ersten Linse wird dadurch auf ein Volumen von ca. 20 · 20 · 20 $\mu m^3$ rweitert. Dieser erweiterte Toleranzbereich ist in lateraler Richtung durch den maximal zulässigen Kippwinkel von ca. 1° der Achse des Lichtbündels zu den Linsenachsen und der Faserachse und des zulässigen Strahlversatzes des kollimierten Strahls zur Fokussierungslinse bedingt. Zu große Kippwinkel als Folge eines zu großen Lateralversatzes zwischen Laser und Kollimierungslinse führen insbesondere bei asphärischen Linsen zu einer komahaften Verzerrung des Strahls. Eine zu große axiale Dejustage zwischen dem Laser und der Kollimierungslinse führt einmal zu einer Veränderung des Vergrößerungsverhältnisses, was zu Koppelverlusten gegenüber dem optimalen Vergrößerungsverhältnis führt. Zum anderen wird der Strahl im Bereich der Fokussierungslinse stärker aufgeweitet, so daß der Linsenrand oder auch schon der zwischen den Linsen befindliche Isolator einen Teil des Strahls abschneidet, was ebenfalls zu Koppelverlusten führen würde.

Auch der erweiterte Toleranzbereich des Lasers läßt sich mit den Montageverfahren nach dem Stand der Technik justagefrei nicht oder nur mit sehr hohen Kosten und Aufwand erreichen. In der vorbekannten Lösung DE 42 32 327 A1 sind daher mehrere Justagemöglichkeiten angegeben. Zum einen eine dreiachsige aktive Justage der Kollimierungslinse zum ersten Laser. Dann eine laterale Justierung der zweiten Linse, die gleichzeitig zur Einstellung der Strahlrichtung dient, damit der fokussierte Strahl die schräg geschnittene Faser unter dem richtigen Winkel trifft. Zusätzlich ist eine dreiachsige Justage der Faser vorgesehen.

In der vorbekannten Schrift EP 0 259 888 B1 ist die Laserdiode ebenfalls auf einem Chipträger montiert. Dieser wird zur Vorpositionierung in Nuten auf einer Trägerplatte in einer Ebene senkrecht zur Strahlrichtung relativ zu einer Linse verschoben, die ebenfalls in dieser Trägerplatte montiert ist. Da der Laser während der Bewegung bei einer aktiven Justage in Betrieb sein muß, erhält man Probleme mit den Anschlußleitungen des Lasers und mit der Wärmeabfuhr. Auch nach der Fixierung liegt der Chipträger nur mit seiner Seitenfläche an eine Seitenfläche der Nut in der Trägerplatte an, was zu einem erheblichen Wärmewiderstand zwischen Chipträger und Trägerplatte und damit zu einer unzureichenden Laserkühlung führt.

In beiden vorbekannten Lösungen ist neben der Faserjustage noch eine aufwendige und kostenintensive Justage zwischen dem Laser und der ersten Linse erforderlich. In der vorbekannten Lösung DE 42 32 327 A1 wird zwischen den Linsen noch ein Isolator in den kollimierten Strahl gesetzt, um störende Rückwirkungen auf den Laser zu vermeiden. Solche Isolatoren wirken nach dem Faraday-Prinzip und haben in einem eng spezifizierten Wellenlängen- und Temperaturbereich eine sehr hohe Rückflußdämpfung, die je nach Typ (einstufig oder zweistufig) 30 bis 60 dB betragen kann. Verläßt man jedoch den spezifizierten Temperatur- oder Wellenlängenbereich, so nimmt die Rückflußdämpfung stark ab, was zu Fehlfunktionen des Lasers führen kann. Die Konstanz der Wellenlänge des Lasers wird in der vorbekannten Lösung durch eine Peltier-Regelung mit Thermistor-Temperaturmessung in Lasernähe erreicht. Der Isolator ist aber in einem Stutzen montiert, der in die Gehäusewand eingelassen ist. Bei Änderungen der Gehäusetemperatur ändert sich daher auch die Temperatur des Isolators mit. Bei einer Änderung der Umgebungstemperatur oder der Laserleistung wird die Temperatur des Lasers über die Peltierregelung konstant gehalten. Dabei wird dem Laser über das Peltierelement Wärme entzogen und dem Gehäuse zugeführt. Da der Isolator mit dem Gehäuse in thermischem Kontakt ist, machen sich dort Temperaturschwankungen sogar noch verstärkt bemerkbar, wodurch die Dämpfungseigenschaften des Isolators verschlechtert werden.

Ein weiteres Problem ist, daß zur Ankopplung eines Halbleiterlasers an eine Einmodenfaser eine abbildende Koppeloptik erforderlich ist, da üblicherweise die Feldverteilung eines Lasers nicht mit der einer Faser übereinstimmt. Eine Einmodenfaser hat üblicherweise ein nahezu gaußförmiges Modenfeld mit einem Radius von ca. 4,5 µm und zirkularer Symmetrie. Ein Halbleiterlaser hat typischerweise ein elliptisches Modenfeld mit einer großen Halbachse von ca. 2 µm und einer kleinen Halbachse von cs. 0,5 µm. Muß ein Laser mit einem stark elliptischen Fernfeld verwendet werden, so lassen sich die Modenfelder der Lasers und der Faser mit einer rotationssymmetrischen Optik nicht vollständig aufeinander abbilden, wodurch der maximal erreichbare Koppelwirkungsgrad begrenzt wird.

In der EP-A-465 230 ist eine optische Baugruppe auf Silicium-Basis beschrieben, bei der eine mikrostrukturierte optische Bank mit Vertiefungen eingesetzt ist, die zur Aufnahme eines Zwischenträgers für einen Laserchip, einer Kollimierungslinse, eines Isolators, einer Fokussierungslinse und eines Lichtwellenleiters dient. Für diese verschiedenen optischen Komponenten sind jeweils getrennte Aufnahmevertiefungen vorgesehen. Bei dieser Konstellation ist es sehr schwierig, die erforderlichen Toleranzen einzuhalten.

Es ist Aufgabe der Erfindung, ein Lasermodul anzugeben bei dem die oben beschriebenen Nachteile vermieden werden.

Die Aufgabe wird durch ein Lasermodul mit den Merkmalen des Patentanspruches 1 gelöst. Vorteilhafte Weiterbildungen sind in den Unteransprüchen angegeben.

Die vorliegende erfindungsgemäße Lösung vermeidet die oben beschriebenen Mängel der vorbekannten Lösungen und führt noch weitere Verbesserungen ein. In der vorliegenden Lösung ist nur ein aktiver Justageschritt an einer unkritischen Stelle, nämlich an der Lichtwellenleiterseite erforderlich, die bei den vorbekannten Lösungen ebenfalls erforderlich ist. Hier liegen die erforderlichen Toleranzen im Bereich von 2 µm in den lateralen Richtungen und von 30 µm in axialer Richtung. Diese Toleranzen lassen sich durch bekannte Flansch-Justage-Verfahren und bei Fixierung mit Laserschweißpunkten einhalten.

Zur Anpassung des elliptischen Modenfeldes des Halbleiterlassers auf das zirkulare Moenfeld der Faser setzt man eine Abbildungslinse mit einer zylindrischen Komponente ein, um für die beiden Halbachsen des Lasermodenfeldes unterschiedliche Vergrößerungen zu erreichen. Damit die zylindrische Mikrolinse nicht justiert werden muß, kann die erste Nut, die für die erste Linse und den Isolator vorgesehen ist, eine Verbreiterung, die beispielsweise einen ebenen Nutboden hat, aufweisen. Diese Verbreiterung ist durch anisotropes Ätzen herstellbar. Die zylindrische Mikrolinse kann in die entstandene Verbreiterung eingelegt werden und ist durch die schrägen Seitenwände in dieser zentriert.

Ein erfindungsgemäßes Ausführungsbeispiel des Lasermoduls wird anhand der Zeichnungen erläutert.

Es zeigen:

Figur 1 eine Draufsicht auf ein erfindungsgemäßes Lasermodul mit Butterfly-Gehäuse,

Figur 2 einen Längsschnitt durch obiges Lasermodul,

Figur 3 eine Ausschnittsvergrößerung von Figur 1,

Figur 4 die Aufnahme für den Laser mit Ausrichtungsmarken,

Figur 5 bis 7 Draufsicht, Seitenansicht und Ansicht der ersten Linse mit Isolator im eingelegten Zustand.

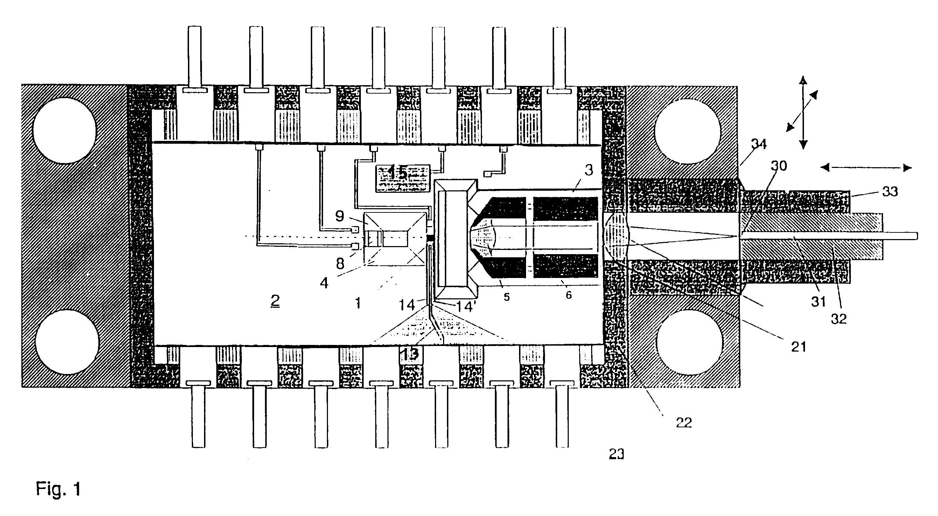

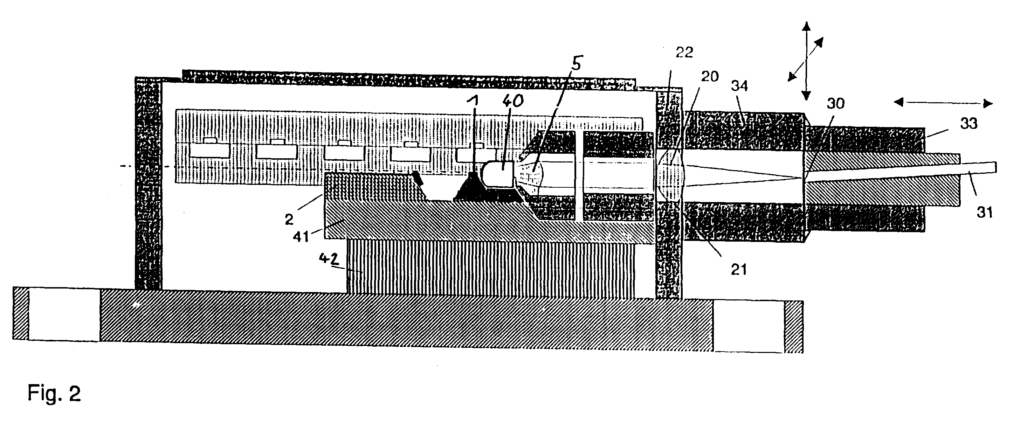

Die Figuren 1 und 2 zeigen in Draufsicht und Längsschnitt erfindungsgemäß ein Lasermodul. Der Laserchip 1 ist direkt auf einer mikromechanisch strukturierten Silizium-Trägerplatte 2 montiert. Diese Trägerplatte 2 ist in größerem Maßstab in Figur 2 dargestellt. Die Silizium-Trägerplatte 2 besitzt zwei anisotrop geätzte Nuten 3 und 4. Die Nut 3 dient zur Aufnahme der Kollimierungslinse 5 und des Isolators 6. Außerdem weist die Nut 3 eine Verbreiterung auf. Diese Verbreiterung ist durch anisotropes Ätzen hergestellt. Sie weist einen ebenen Nutgrund auf und ist am laserseitigen Ende der Nut 3 angeordnet. In dieser Verbreiterung befindet sich eine zylindrische Mikrolinse 40, die zur Anpassung des elliptischen Modenfeldes des Halbleiterlasers 1 an das zirkulare Modenfeld der Faser 31 dient. Die zylindrische Mikrolinse 40 wird in der Verbreiterung der Nut 3 gehalten, indem die Verbreiterung derart dimensioniert ist, daß die Mikrolinse 40 auf dem Nutboden aufliegt und durch die geneigten Seitenwände justiert ist. Als Kollimierungslinse kann zur Vermeidung sphärischer Aberrationen und damit zur Verbesserung des Koppelwirkungsgrades vorzugsweise eine asphärische Linse verwendet werden. Die Linse 5 besitzt einen zylindrischen Rand 7 oder eine Fassung mit einem zylindrischen Rand 7. Der Außendurchmesser der Linse 5 bzw. der Linsenfassung ist vorzugsweise ebenso groß wie der Außendurchmesser des ebenfalls zylindrischen Isolators 6. Es ist jedoch auch möglich, daß Linse und Isolator unterschiedliche Außendurchmesser haben, in diesem Fall muß die Nut 6 in den Bereichen für die Linsenaufnahme und für die Isolatoraufnahme unterschiedliche Breiten haben. Die Nut 4 dient zur Aufnahme der Monitordiode 8, die zur Leistungsregelung des Laserchips 1 erforderlich ist. Diese Monitordiode 8 wird auf der dem Laser abgewandten schrägen Rückwand 9 der Nut 4 montiert. Der Laser 1 sitzt auf dem zwischen den Nuten 3 und 4 verbleibenden Steg 10. Die Breite des Steges entspricht ungefähr der Länge des Lasers. Bei Lasern, deren strahlende Zone auf der Oberseite des Chips liegt (Epi-up), ist es vorteilhaft, die Breite a des Steges 10 ebenso groß oder einige Mikrometer größer als die Chiplänge 1 des Laserchips zu wählen, da dann auch bei etwaigen Montagetoleranzen die Grundfläche des Lasers überall in gutem Wärmekontakt mit dem Siliziumsubstrat ist. Bei Lasern, deren strahlende Zone auf der Unterseite liegt (Epi-down), ist es dagegen vorteilhaft, wenn die Stegbreite a gleichgroß oder um wenige Mikrometer kleiner als die Chiplänge ist, damit bei einer etwaigen Montagetoleranz der Strahl nicht durch das Siliziumsubstrat abgeschattet wird.

Nach dem Stand der Technik werden Laserchips auf Wärmesenken mit senkrecht zur Montagefläche befindlichen Stirnflächen montiert. Bei Epi-down-Lasern muß dabei die Kante zwischen der vorderen Stirnfläche und der Montagefläche möglichst scharf sein, damit einerseits ein guter Wärmeübergang zwischen Laserchip und Wärmesenke vorhanden ist und andererseits der Laserstrahl durch die Wärmesenke nicht abgeschattet wird. Die senkrechte Begrenzung der Wärmesenke nach dem Stand der Technik schnürt aber den Wärmefluß vom Laser über die Wärmesenke ein, wodurch auch bei gut leitenden Wärmesenken, wie zum Beispiel Diamant, der Wärmewiderstand erhöht wird. Bei der erfindungsgemäßen Lösung sind dagegen die vor den Laserspiegeln befindlichen Seitenflächen der Nuten 3 und 4 infolge der Geometrie der anisotropen Ätzung von Silizium um den Böschungswinkel $\alpha$ = 54,7° gegenüber der Substratoberfläche geneigt. Dieser Winkel ist einerseits groß genug, damit auch bei Lasern mit einem sehr breiten Fernfeld kein Licht abgeschattet werden kann. Andererseits ist der Winkel wesentlich kleiner als 90° wie bei den Wärmesenken nach dem Stand der Technik. Dadurch können sich die Wärmeflußlinien über die Grundfläche des Laserchips hinaus ausbreiten, was zu einer Verringerung des Warmewiderstandes führt. Die durch einen hochpräzisen anisotropen Ätzprozeß hergestellten Kanten zwischen der als Montagefläche dienenden Oberfläche des Substrates und den Seitenflächen der Nuten 3 und 4 sind sehr scharf und in ihrer Position hochgenau. Dadurch ist es möglich, die Breite a des Steges 10 mit einer Toleranz von wenigen Mikrometern an die Länge 1 des Laserchips anzupassen und somit einen guten Wärmekontakt zwischen dem Laserchip und dem Siliziumsubstrat ohne Gefahr der Strahlabschattung zu erreichen.

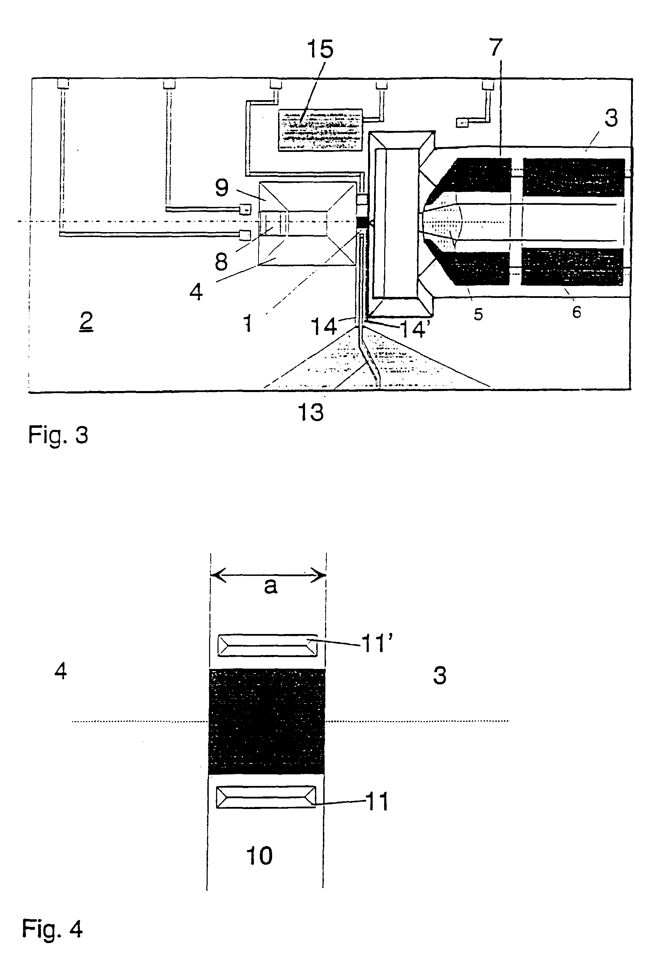

Die Figur 4 zeigt einen vergrößerten Ausschnitt aus dem mittleren Bereich des Steges 10, der für die Aufnahme des Lasers 1 vorgesehen ist. An beiden Seiten der Aufnahmefläche ist je eine V-Nut 11 und 11' anisotrop geätzt, die als Marken zur Ausrichtung des Laserchips dienen. Bei der Montage wird der Laser unter visueller Beobachtung zwischen diese beiden Marken positioniert. Dabei muß der Laser nicht im aktiven Betrieb sein wie im Stand der Technik, sondern es genügt hier eine passive Justage, die wesentlich einfacher durchgeführt werden kann, da der Laser noch nicht kontaktiert sein muß. Bei der passiven Justage nach den Marken 11 und 11' ist eine Positioniergenauigkeit von wenigen Mikrometern möglich. Da die Marken 11 und 11' im gleichen anisotropen Ätzprozeß wie die Nuten 3 und 4 hergestellt werden, liegt ihre gegenseitige Lagetoleranz im Bereich von weniger als 2 Mikrometern. Dadurch erhält man eine sehr genaue Ausrichtung zwischen dem Laser und der Kollimierungslinse 5 sowie dem Isolator 6.

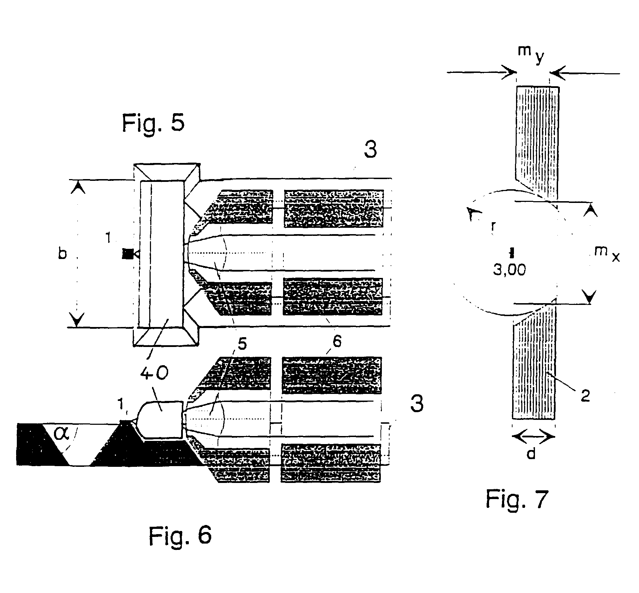

Die Position der Kollimierungslinse 5 wird durch die Lage und Größe der Nut 3 eindeutig festgelegt. Die Dicke d des Silizium-Substrates 2 wird dabei abhängig vom Radius der Kollimierungslinse so gewählt, daß die berührende Mantellinie noch auf den Seitenflanken der Nut 3 aufliegt. In den Figuren 5, 6 und 7 ist die eingelegte Linse mit Isolator in drei Schnittebenen mit Ansicht von oben, von der Seite und von vorn dargestellt. Um einen kleinen Arbeitsabstand zwischen dem Laser und der Kollimierungslinse zu erreichen ist hier die Fassung der Kollimierungslinse in ihrem vorderen Teil konusartig geformt und damit an die schräge Stirnflanke der Nut 3 angepaßt. Die Höhe der Linsenmitte muß an die Höhe h der strahlenden Fläche des Lasers angepaßt sein. Die Höhe der Linsenmitte kann über die Nutbreite b der Nut 3 eingestellt werden. Aufgrund der kristallographischen Eigenschaften des Siliziums berechnet sich der Böschungswinkel $\alpha$ zu

$$\alpha = \arctan(\sqrt{2}) = 54{,}7° \qquad (1)$$

Die Nutbreite b, die erforderlich ist, damit die Mitte der Linse mit einem Außenradius r in der Höhe h liegt, ist

$$b = r \cdot \sqrt{6} - h \cdot \sqrt{2} \qquad (2)$$

Die den Zylindermantel berührenden Böschungslinien liegen in einer Tiefe von

$$m_y = r/\sqrt{3} - h \qquad (3)$$

und haben einen Abstand von

$$m_x = r \cdot \sqrt{8/3} \qquad (4)$$

von einander.

Für einen Linsenradius von 1500 µm und einer Höhe der optischen Achse über der Substratoberfläche von h = 100 µm für Epi-up-Laser erhält man

$$b = 3533 \ \mu m$$

$$m_y = 766 \ \mu m$$

$$m_x = 2449 \ \mu m$$

Bei h = 0 für Epi-down-Laser erhält man

$$b = 3674 \ \mu m$$

$$m_y = 866 \ \mu m$$

$$m_x = 2449 \ \mu m$$

Da die berührenden Mantellinien in einer Tiefe von 766 µm bzw. 866 µm unter der Substratoberfläche liegen, muß das Substrat mindestens diese Dicke haben, damit die Berührlinien noch innerhalb der Seitenflächen der Nut und nicht auf der unteren Kante liegen. Eine Substratdicke von 1000 μm ist zur Aufnahme der Linse ausreichend. Die Nut muß dann ganz durchgeätzt werden, wobei die Linse unter die Substratunterseite etwas hinaussteht. Die unter der Silizium-Trägerplatte befindliche Montageplatte 41 auf dem Peltierelement 42 muß im Bereich der Nut eine entsprechende Ausnehmung besitzen. Diese Ausnehmung kann entfallen, wenn die Silizium-Trägerplatte dicker ist als der Linsenradius. Einen hochgenauen axialen Anschlag für die Kollimierungslinse erhält man durch die Stirnfläche der Nut 3. Auf diese Weise läßt sich die Kollimierungslinse mit der durch die Silizium-Mikromechanik erreichbaren hohen Genauigkeit relativ zum Laser in allen drei Koordinaten justagefrei positionieren. Die Fixierung kann durch ein bekanntes Verfahren, wie zum Beispiel Kleben, geschehen. Vorteilhaft dabei ist, daß in der Auflagelinie der Klebespalt die Breite Null besitzt und daher keine Dejustage bei einer Schrumpfung des Klebers auftreten kann.

Die Silizium-Trägerplatte 2 dient außerdem zur Aufnahme der elektrischen Kontaktierungsleitungen für den Lager 1 und die Photodiode 8. Für Hochfrequenzanwendungen kann auf der Siliziumoberfläche eine Isolationsschicht beispielsweise aus Polyimid in einer Dicke von 10 - 20 μm aufgebracht werden, Diese Isolationsschicht dient als Dielektrikum für HF-Microstrip-Wellenleiter oder für koplanare HF-Wellenleiter. Bei Microstrip-Wellenleitern ist zwischen dem Silizium-Substrat und der Isolationsschicht eine ganzflächige Metallisierungsschicht als Masse. Bei koplanaren HF-Leitungen ist der elektrische Wellenleiter 13 von zwei seitlichen Masseleitungen 14 und 14' umgeben. Außerdem können auf dem Siliziumsubstrat noch weitere Bauteile montiert werden. So läßt sich der Thermistor 15 direkt in der Nähe des Lasers auf dem Siliziumsubstrat mit gutem Wärmekontakt zum Laser montieren. Auch Kondensatoren, Widerstände und Spulen, die für die HF-Ansteuerung des Lasers erforderlich sind oder sogar ein integrierter Ansteuerungsbaustein, lassen sich in unmittelbarer Nähe des Lassers auf dem Silizium-Substrat montieren. Da in der erfindungsgemäßen Lösung die HF-Leitungen bis unmittelbar an die Laserdiode herangeführt werden können, können so Frequenzen bis zu 30 GHz erreicht werden. Demgegenüber lassen sich nach dem Stand der Technik, wenn die HF-Leitungen von Ansteuerungsschaltungen außerhalb des Gehäuses über Gehäusedurchführungen und Bonddrähten zum Laser geführt werden müssen, nur etwa 2 - 3 GHz erreichen.

Bei den Lösungen nach dem Stand der Technik wird zur hermetisch dichten Lichtdurchführung ein schräg gestelltes Planfenster in den Strahlengang zwischen den Linsen gebracht. Im Ausführungsbeispiel wird die Fokussierungslinse 20 hermetisch dicht in die Öffnung 21 der Gehäusestirnwand 22 eingelötet oder eingeschweißt. Zum Einschweißen ist die Fokussierungslinse dazu mit einer schweißbaren Metallfassung versehen. Zum Einlöten hat die Linse ebenfalls eine Metallfassung mit einer lötbaren Beschichtung oder die lötbare Beschichtung ist direkt auf dem Rand der ungefaßten Linse aufgebracht. Dadurch kann das Gehäuse 23 gegenüber den Gehäusen, die für Ausführungen nach dem Stand der Technik erforderlich sind, wesentlich kostengünstiger sein, da statt des Stutzens mit dem schrägen Planfenster nur eine Öffnung 21 in der Gehäusestirnwand 22 aufgebracht werden muß. Die Linse 20 fokussiert das Lichtbündel auf die Stirnfläche 30 einer Faser 31. Zur Vermeidung von Rückreflexionen kann die Stirnfläche 30 gegenüber der optischen Achse geneigt sein. Die Faser 31 muß dann entsprechend der Lichtbrechung an der geneigten Stirnfläche ebenfalls unter einem schrägen Winkel in einer Führungshülse 31 gefaßt sein. Mit dieser Führungshülse, die in einer Buchse 33 läuft, kann die Faser axial justiert werden. Zur lateralen Justage wird die Stirnfläche der Buchse 33 auf der Stirnfläche einer Abstandshülse 34 verschoben. Die Fixierung der axialen und lateralen Position geschieht vorzugsweise durch Laserschweißen. Die axiale und laterale Justage sowie die Fixierung kann vorteilhafterweise in einem Arbeitsgang mit automatischer Steuerung durchgeführt werden. Dieser automatisierbare Arbeitsschritt ist der einzige aktive Justageschritt, der bei der erfindungsgemäßen Lösung erforderlich ist. Die Toleranzen sind dabei so groß, daß eine Dejustage beim Laserschweißen nur einen sehr geringen Einfluß auf den Koppelwirkungsgrad hat.

## Patentansprüche

1. Lasermodul, das in einem Gehäuse angeordnet ist, an dem ein Lichtwellenleiter (31) befestigt ist, mit einem Halbleiterlaser (1), mit einer Zweilinsen-Koppeloptik (5, 20) zur Einkopplung von Licht in den Lichtwellenleiter (31), insbesondere in eine Einmodenfaser, ferner mit einem Isolator (6) im Strahlengang zwischen den beiden Linsen (5, 20) der Koppeloptik, mit einer Monitordiode (8) und mit einem Peltierkühler (42), wobei eine Silizium-Trägerplatte (41) vorgesehen ist, die mittels anisotroper Ätztechnik mikromechanisch strukturiert ist, und wobei zwei zueinander fluchtende Nuten (3, 4) vorgesehen sind, die zur Aufnahme der genannten optischen Komponenten dienen, gekennzeichnet durch folgende Merkmale:

- in die erste Nut (3) sind eine Kollimierungslinse (5), eine zylindrische Mikrolinse (40) und der Isolator aufgenommen.
- fluchtend zur ersten Nut (3) ist die zweite Nut (4) vorgesehen, die zur Aufnahme der Monitordiode (8) dient,
- der Halbleiterlaser (1) ist auf einem Steg zwischen den Enden der Nuten (3, 4) auf der Silizium-Trägerplatte montiert,

- als Bestandteil der Koppeloptik ist die zylindrische Mikrolinse (40) zwischen dem Halbleiterlaser (1) und der in die erste Nut (3) aufgenommenen Kollimierungslinse (5) vorgesehen,
- eine Verbreiterung der ersten Nut (3) ist vorgesehen, in welche die zylindrische Mikrolinse (40) eingelegt ist,
- der Lichtwellenleiter (31) ist in drei Richtungen justierbar außen am Gehäuse befestigt,
- im Gehäuse zwischen Isolator (6) und Lichtwellenleiter (31) ist ein geneigtes Fenster oder die dritte Linse (20) der Koppeloptik hermetisch dicht in die Gehäusewand eingebracht.

2. Lasermodul nach Anspruch 1, dadurch gekennzeichnet,
daß auf den Steg (10) V-Nuten (11,11') vorgesehen sind, die als Marken zur Ausrichtung des Halbleiterlasers (1) dienen.

3. Lasermodul nach einen der Ansprüche 1 oder 2, dadurch gekennzeichnet,
daß die Monitordiode (8) an der vom Laser (1) entfernten geneigten Seitenwand der Nut (4) befestigt ist.

4. Lasermodul nach einem der Ansprüche 1 bis 3, dadurch gekennzeichnet,
daß die Breite des Steges (10) gleichgroß oder geringfügig größer als die Länge des Lasers (1) ist, falls dieser seine strahlende Zone nahe der Oberseite aufweist oder daß die Breite des Steges (10) gleichgroß oder geringfügig kleiner als die Länge des Lasers (1) ist, falls dieser seine strahlende Zone nahe der Unterseite aufweist.

5. Lasermodul nach einem der Ansprüche 1 bis 4, dadurch gekennzeichnet,
daß auf der Silizium-Trägerplatte (2) elektrische Kontaktierungsleitungen, Bauteile HF-Mikrostrip-Wellenleiter und/oder Ansteuerschaltungen, -bausteine vorgesehen sind.

6. Lasermodul nach einen der bisherigen Ansprüche, dadurch gekennzeichnet,
daß die Silizium-Trägerplatte (2) auf einem Peltierkühler (42) befestigt ist.

7. Lasermodul nach einem der bisherigen Ansprüche, dadurch gekennzeichnet,
daß die zylindrische Mikrolinse (40) derart ausgestaltet ist, daß das elliptische Modenfeld des Halbleiterlasers an das zirkulare Modenfeld des Lichtwellenleiters durch Mikrolinse (40) und die Linsen der Koppeloptik angepaßt ist.

**Claims**

1. Laser module, which is arranged in a housing, on which an optical conductor (31) is mounted, having a semiconductor laser (1), having two-lens channel optics (5, 20) for injecting light into the optical conductor (31), in particular into a monomode fibre, first of all having an isolator (6) in the beam path between the two lenses (5, 20) of the coupling optics, having a monitor diode (8) and having a Peltier cooler (42), in which case a silicon substrate (41) is provided which is structured micromechanically by means of an anisotropic etching technique, and in which case two mutually aligned grooves (3, 4) are provided which are used to accommodate the said optical components,
characterized by the following features:

- a collimating lens (5), a cylindrical microlens (40) and the isolator are accommodated in the first groove (3).
- the second groove (4) is provided such that it is aligned with respect to the first groove (3) and is used to accommodate the monitor diode (8),
- the semiconductor laser (1) is mounted on a web between the ends of the grooves (3, 4) on the silicon substrate,
- as a component of the coupling optics, the cylindrical microlens (40) is provided between the semiconductor laser (1) and the collimating lens (5) which is accommodated in the first groove (3),
- a broadened region is provided in the first groove (3), into which the cylindrical microlens (40) is inserted,
- the optical conductor (31) is mounted on the outside of the housing such that it can be adjusted in three directions,
- a suitable window or the third lens (20) of the coupling optics is introduced in a hermetically sealed manner into the housing wall of the housing, between the isolator (6) and the optical conductor (31).

2. Laser module according to Claim 1, characterized in that V-grooves (11, 11') are provided on the web (10) and are used as markers for alignment of the semiconductor laser (1).

3. Laser module according to one of Claims 1 or 2, characterized in that the monitor diode (8) is mounted on that inclined sidewall of the groove (4) which is remote from the laser (1).

4. Laser module according to one of Claims 1 to 3, characterized in that the width of the web (10) is equal to or slightly greater than the length of the laser (1) if this laser (1) has its radiating zone close to the upper face, or in that the width of the web (10) is equal to or slightly less than the length of the laser (1) if the laser (1) has its radiating zone close to the lower face.

5. Laser module according to one of Claims 1 to 4, characterized in that electrical contact-making lines, components FR microstrip waveguides and/or drive circuits, -modules are provided on the silicon substrate (2).

6. Laser module according to one of the preceding claims, characterized in that the silicon substrate (2) is mounted on a Peltier cooler (42).

7. Laser module according to one of the preceding claims, characterized in that the cylindrical microlens (40) is designed in such a manner that the elliptical mode field of the semiconductor laser is matched to the circular mode field of the optical conductor by means of the microlens (40) and the lenses of the coupling optics.

**Revendications**

1. Module de connexion laser logé dans un boîtier auquel est fixé un guide d'ondes lumineuses (31), comprenant

   - un laser à semi-conducteur (1) avec une optique de couplage de lentilles (5, 20) pour injecter la lumière dans le guide d'ondes (31), notamment une fibre monomode,
   - un isolateur (6) dans le chemin des rayons entre les deux lentilles (5, 20) de l'optique de couplage,
   - une diode de contrôle (8), et
   - un dispositif de refroidissement à effet Peltier (42),
   - une plaque de support de silicium (41) structurée en micromécanique par attaque chimique anisotrope, et
   - deux rainures (3, 4) alignées pour recevoir les composants optiques ci-dessus,
     caractérisé en ce que
   - une lentille de collimation (5), une microlentille cylindrique (40) et l'isolateur sont logés dans la première rainure (3),
   - dans l'alignement de la première rainure (3) il y a une seconde rainure (4) pour recevoir la diode de contrôle (8),
   - le laser à semi-conducteur (1) est monté sur une nervure entre les extrémités des rainures (3, 4) sur la plaque de support de silicium,
   - comme composant de l'optique de couplage, la microlentille cylindrique (40) est prévue entre le laser à semi-conducteur (1) et la lentille de collimation (5) logée dans la première rainure (3),
   - la première rainure (3) comporte une partie élargie pour recevoir la microlentille cylindrique (40),
   - le guide de lumière (31) est fixé au boîtier de manière à pouvoir s'ajuster vis-à-vis de l'extérieur dans trois directions,
   - dans le boîtier, entre l'isolateur (6) et le guide d'ondes (31) il est prévu une fenêtre appropriée ou encore la troisième lentille (20) de l'optique de couplage, logée de manière hermétique dans la paroi du boîtier.

2. Module de connexion laser selon la revendication 1,
   caractérisé en ce que
   la nervure (10) comporte des rainures en V (11, 11') servant de repère pour aligner le laser à semi-conducteur (1).

3. Module de connexion laser selon l'une des revendications 1 ou 2,
   caractérisé en ce que
   la diode de contrôle (8) est fixée à la paroi latérale de la rainure (4), inclinée, éloignée du laser (1).

4. Module de connexion laser selon l'une des revendications 1 à 3,
   caractérisé en ce que
   la largeur de la nervure (10) est égale ou légèrement supérieure à la longueur du laser (1) si celui-ci présente une zone d'émission proche du côté supérieur ou la largeur de la nervure (10) est égale ou légèrement inférieure à la longueur du laser (1) si celui-ci comporte une zone d'émission proche du côté inférieur.

5. Module de connexion laser selon l'une des revendications 1 à 4,
   caractérisé par
   des lignes de contact électriques, des composants de guides d'ondes en microbandes HF et/ou des circuits de commande et des composants prévus sur la plaque de support de silicium (2).

6. Module de connexion laser selon l'une quelconque des revendications précédentes,
   caractérisé en ce que
   la plaque de support de silicium (2) est fixée sur un radiateur à effet Peltier (42).

7. Module de connexion laser selon l'une quelconque des revendications précédentes,
   caractérisé en ce que
   la microlentille cylindrique (40) est réalisée pour que le champ de mode elliptique du laser à semi-conducteur soit adapté au champ de mode circulaire du guide d'ondes par la microlentille (40) et les lentilles de l'optique de couplage.

Fig. 1

Fig. 2

Fig. 3

Fig. 4

## Fig. 5

## Fig. 6

## Fig. 7